# EUROPÄISCHE PATENTANMELDUNG

(11) **EP 0 707 948 A1**
(43) Veröffentlichungstag der Anmeldung: **24.04.1996**
(21) Anmeldenummer: 95116247.8
(22) Anmeldetag: 16.10.1995
(51) Int. Cl.: B32B 13/12, B32B 33/00, B32B 7/12, E04C 2/288

(54) **Schalldämmendes Verbundelement**

(30) Priorität: 22.10.1994 DE 9417021 U
(71) Anmelder: BASF AKTIENGESELLSCHAFT, D-67056 Ludwigshafen (DE)
(72) Erfinder: König, Dietrich, D-67069 Ludwigshafen (DE); Krückau, Fritz Ernst, D-67271 Battenberg (DE); Boy, Elmar, D-67433 Neustadt (DE)

(57) **Zusammenfassung**

Die Erfindung betrifft ein wärme- und schalldämmendes Verbundelement aus einer Polystyrol-Extruderschaum-Platte und einer Gipskarton-Platte, die durch eine elastische, gegebenenfalls geschäumte Klebemasse miteinander verbunden sind.

## Beschreibung

Die Erfindung betrifft ein wärme- und schalldämmendes Verbundelement aus einem Polystyrol-Extruderschaum (XPS) und einer Gipskarton-Platte, die durch eine Klebstoffschicht miteinander verbunden sind.

Verbundelemente aus XPS-Platten und Gipskarton-Platten werden in zunehmendem Maße zur Innendämmung von Außenwänden bei Wohngebäuden angewandt. Die beiden Schichten wurden bisher durch Klebstoffe, die nach der Härtung eine harte Masse bilden, miteinander verbunden, beispielsweise durch Klebstoffe auf Basis von Polyurethan oder Polyvinylacetat.

Derartige Verbundelemente zeichnen sich zwar durch gute Biegesteifigkeit und eine hervorragende Wärmedämmung aus, es hat sich aber gezeigt, daß ihre Schalldämmung für viele Anwendungszwecke nicht ausreichend ist. So ist beispielsweise die Schallängsleitung an Wänden, die wesentlich für die Schallübertragung zwischen zwei Nachbarräumen verantwortlich ist, bei den genannten Verbundelementen höher als bei Wänden mit aufgeklebter Gipskartonplatte allein. Ein quantitatives Maß für die Schallübertragung von einem Senderaum in einen benachbarten Empfangsraum ist das "Einfügedämmaß" nach DIN 4109. Bei einem Verbund aus einer 40 mm dicken XPS-Platte und einer 9,5 mm dicken Gipskarton-Platte, die durch einen herkömmlichen Polyurethan-Kleber (Klebschichtdicke 0,2 mm) miteinander verbunden sind, beträgt das Einfügedämmaß 28 dB (A). Dieser Wert ist aber z.B. nach einer verschärften Verordnung des französischen Ministeriums für Wohnungswesen nicht mehr ausreichend.

Der Erfindung lag also die Aufgabe zugrunde, die Schalldämmung bei Verbundelementen aus XPS-Platten und Gipskarton-Platten zu verbessern.

Diese Aufgabe wird dadurch gelöst, daß als Klebstoffschicht eine elastische, ungeschäumte oder geschäumte Klebemasse verwendet wird.

Polystyrol-Extruderschaum A ist an sich bekannt. Er zeichnet sich gegenüber anderen Schaumstoffen durch gute Steifigkeit und Druckfestigkeit aus. Die Dichte der XPS-Platten liegt im allgemeinen zwischen 20 und 60 kg · m⁻³, ihre Dicke vorzugsweise zwischen 20 und 160 mm. Die Wärmeleitfähigkeit ist im allgemeinen kleiner als λ = 0,035 W · m⁻¹ · K⁻¹.

Gipskartonplatten C sind ebenfalls wohlbekannt. Sie bestehen aus einer 9,5 bis 12 mm dicken Gipsschicht, die beidseitig mit Karton laminiert ist.

Die erfindungsgemäße Klebstoffschicht B besteht aus einer elastischen, ungeschäumten oder geschäumten Klebemasse.

Als ungeschäumte Klebemasse kommt beispielsweise ein dauerelastischer Kleber oder eine dauerelastische Fugenmasse auf Acrylat- oder Silikonbasis in Frage, wobei die Aushärtung durch Verdunsten des Verdünnungsmittels, durch chemische Reaktion oder durch physikalische Einwirkungen, z.B. Wärme, elektromagnetische Wellen (Mikrowellen) erfolgen kann.

Eine geeignete geschäumte Klebemasse ist beispielsweise ein Einoder Zwei-Komponenten-Polyurethankleber, wobei die Dichte des Schaumes zwischen 10 und 40 kg · m³ liegen kann.

Grundsätzlich kann man auch elastische Klebebänder mit beidseitigem Klebeauftrag verwenden.

Der Kleber wird vorzugsweise auf die XPS-Platte aufgetragen, während des Aushärtungsprozesses wird darauf dann die Gipskarton-Platte aufgelegt und durch das Eigengewicht der Gipskartonplatte oder durch zusätzliche Preßlasten verklebt. Der Auftrag kann vollflächig erfolgen, aus Ersparnisgründen jedoch zweckmäßigerweise teilflächig, streifenförmig oder punktförmig, wobei die Klebefläche bevorzugt zwischen 3 und 60 % liegt. Durch die Dicke des Auftrages bzw. durch Verwendung einer schaumfähigen Klebemasse kann der Abstand zwischen den Schichten A und C in weiten Grenzen von 0,2 bis 5 mm gezielt eingestellt werden. Durch den Luftraum zwischen streifen- oder punktförmigen Klebestellen kann ein Luftspalt gezielt eingestellt werden. Durch geeignete Wahl der Art des Klebers, der Klebefläche und der Dicke der Klebeschicht können die akustischen Eigensachften des Verbundelements variiert werden.

Bei einem beispielhaften Verbund zur Isolierung einer Außenwand (1) aus einer 40 mm dicken XPS-Platte (2) und einer 9,5 mm dicken Gipskartonplatte (4), die durch eine dauerelastische Silikon-Fugenmasse (3) miteinander verbunden sind, beträgt das Einfügedämmaß 35 dB (A). Die Klebemasse wurde in 5 mm breiten Streifen in einem Abstand von 22mm aufgetragen; die Dicke der Klebstoffschicht betrug 2 mm.

## Patentansprüche

1. Wärme- und schalldämmendes Verbundelement mit drei Schichten:
A. einem Polystyrol-Extruderschaum (2)
B. einer Klebstoff-Schicht (3)
C. einer Gipskarton-Platte (4),
dadurch gekennzeichnet, daß die Klebstoffschicht (3) eine elastische, ungeschäumte oder geschäumte Klebemasse ist.

2. Verbundelement nach Anspruch 1, dadurch gekennzeichnet, daß die Klebemasse vollflächig, teilflächig, streifenförmig oder punktweise aufgetragen ist.
